# EUROPÄISCHE PATENTANMELDUNG

(11) **EP 1 327 548 A1**
(43) Veröffentlichungstag der Anmeldung: **16.07.2003**
(21) Anmeldenummer: 02450005.0
(22) Anmeldetag: 14.01.2002
(51) Int. Cl.: B60K 15/077

(54) **Tank mit Trennwand**

(71) Anmelder: Alutech Gesellschaft m.b.H., 5651 Lend (AT)
(72) Erfinder: Binderberger, Karl, 5620 Schwarzach (AT); Gerlach, Karl-Heinz, 5622 Goldegg (AT)
(74) Vertreter: Weiser, Andreas, Dipl.-Ing.

(57) **Zusammenfassung**

Tank (1) für Flüssigkeiten, insbesondere Kraftstoffe, mit einem Auslaß (3), der im Bereich des Bodens (4) des Tanks (1) von einer Seitenwand (14) des Tanks (1) entfernt einmündet, umfassend zumindest eine Trennwand (7), die vom Boden (4) ausgehend über zumindest einen Teil (H) der Höhe des Tanks (1) hochragt und neben dem Auslaß (3) liegt, und eine Flüssigkeitsausgleichsleitung (12), welche den Bodenbereich (10) des Tanks (1) auf der dem Auslaß (3) zugewandten Seite der Trennwand (7), jedoch in einem Abstand vom Auslaß (3) und der Trennwand (7) entfernt, mit dem Bodenbereich (11) auf der dem Auslaß (3) abgewandten Seite der Trennwand (7) verbindet.

## Beschreibung

Die vorliegende Erfindung betrifft einen Tank für Flüssigkeiten, insbesondere Kraftstoffe, mit einem Auslaß, der im Bereich des Bodens des Tanks von einer Seitenwand des Tanks entfernt einmündet.

Bei einem geringen Füllstand im Tank und einer von der Seitenwand entfernten Lage des Auslasses besteht das Problem, daß schon ein geringfügiges Kippen des Tanks in Richtung auf die genannte Seitenwand die Flüssigkeit zu dieser Seitenwand fließt, wodurch der Auslaß trockenlaufen kann. Dieses Problem tritt insbesondere bei Kraftstofftanks von Fahrzeugen auf, deren Auslaß durch ein etwa in Tankmitte zum Boden hinabreichendes Saugrohr gebildet wird, wenn das Fahrzeug sich in Bergoder Talfahrt befindet, eine Kurve durchfährt oder zwecks Transports gekippt werden muß.

Insbesondere beim Verladen von Kraftfahrzeugen auf Sattelschleppern od. dgl. wird das Fahrzeug häufig um bis zu 15° oder mehr gekippt. Um in dieser Transportstellung ein Starten des Fahrzeuges zu ermöglichen, muß ein entsprechend hoher Kraftstoffüllstand vorhanden sein, was die Auslieferungskosten neuer Fahrzeuge erhöht.

Zur Lösung dieses Problems ist es bereits bekannt, einen entsprechend tiefen Sumpf am Boden des Tanks vorzusehen, d.h. einen Sumpf, dessen Boden noch unter dem Bodenniveau des Tanks liegt, und den Auslaß im Bereich des Bodens des Sumpfes anzuordnen bzw. das Saugrohr bis zum Boden des Sumpfes hinabreichen zu lassen. Diese Lösung erfordert jedoch Platz unterhalb des Bodenniveaus des Tanks, welcher bei Kraftfahrzeugen häufig nicht zur Verfügung steht. Darüber hinaus erhöht das Ausbilden eines Sumpfes die Fertigungskosten des Tanks.

Die Erfindung setzt sich zum Ziel, eine Lösung für das oben genannte Problem zu schaffen, welche kostengünstiger ist als die bekannten Konstruktionen. Dieses Ziel wird gemäß einem ersten Aspekt der Erfindung dadurch erreicht, daß sich der Tank durch zumindest eine Trennwand, die vom Boden ausgehend über zumindest einen Teil der Höhe des Tanks hochragt und neben dem Auslaß liegt, und eine Flüssigkeitsausgleichsleitung auszeichnet, welche den Bodenbereich des Tanks auf der dem Auslaß zugewandten Seite der Trennwand, jedoch in einem Abstand vom Auslaß und der Trennwand entfernt, mit dem Bodenbereich auf der dem Auslaß abgewandten Seite der Trennwand verbindet.

Auf diese Weise bleibt beim Kippen des Tanks in Richtung auf die genannte Seitenwand ein Flüssigkeitsrest in dem Eckbereich zwischen Trennwand und jenem Bodenbereich des Tanks stehen, der von der Flüssigkeitsausgleichsleitung überbrückt ist, da ein darüber ansteigender Flüssigkeitsspiegel über die Flüssigkeitsleitung in den Tankbereich auf der anderen Seite der Trennwand überfließt, und gerade in diesem Eckbereich liegt der Auslaß. Die Gefahr eines Trockenlaufens des Auslasses ist dadurch verringert. Es braucht somit nur ein geringerer Füllstand im Tank vorhanden zu sein, um bei einem Kippen desselben eine Speisung des Auslasses zu gewährleisten.

Eine besonders einfache Konstruktion und damit besonders geringe Fertigungskosten werden erreicht, wenn gemäß einer bevorzugten Ausführungsform der Erfindung die Flüssigkeitsausgleichsleitung ein Rohr ist, welches die Trennwand durchsetzt, im wesentlichen parallel zum Boden des Tanks verläuft und in einem Abstand vom Auslaß endet.

Bei Tanks, die bereits mit zumindest einer inneren vertikalen, durchbrochenen Schwallwand ausgestattet sind, ist es besonders günstig, wenn gemäß einem weiteren bevorzugten Merkmal der Erfindung die Trennwand durch einen undurchlässigen unteren Bereich der Schwallwand gebildet wird. Dies erübrigt das Einsetzen einer gesonderten Trennwand mit den damit verbundenen Material- und Fertigungskosten.

Alternativ wird das oben genannte Ziel in einem zweiten Aspekt der Erfindung dadurch erreicht, daß sich der Tank auszeichnet durch einen Topf, der den Auslaß umgibt und Abstand von den Seitenwänden des Tanks hält, und eine Speiseleitung für den Topf, welche das Topfinnere mit dem von der genannten ersten Seitenwand entfernten Bodenbereich des Tanks, jedoch in einem Abstand vom Topf entfernt verbindet. Auch auf diese Weise bleibt beim Kippen des Tanks in Richtung auf die genannte erste Seitenwand ein Flüssigkeitsrest in dem Topf stehen, wobei das Flüssigkeitsniveau im Topf durch die Höhe der Flüssigkeitssäule in der Speiseleitung und damit durch die Länge der Speiseleitung mitbestimmt wird. Diese Variante der Erfindung beruht auf denselben Prinzipien und hat dieselben Vorteile wie erstgenannte Variante. Zusätzlich ergibt sich der Vorteil, daß der Topf leichter im Tank montierbar ist als beispielsweise eine dicht zu schweißende Wand.

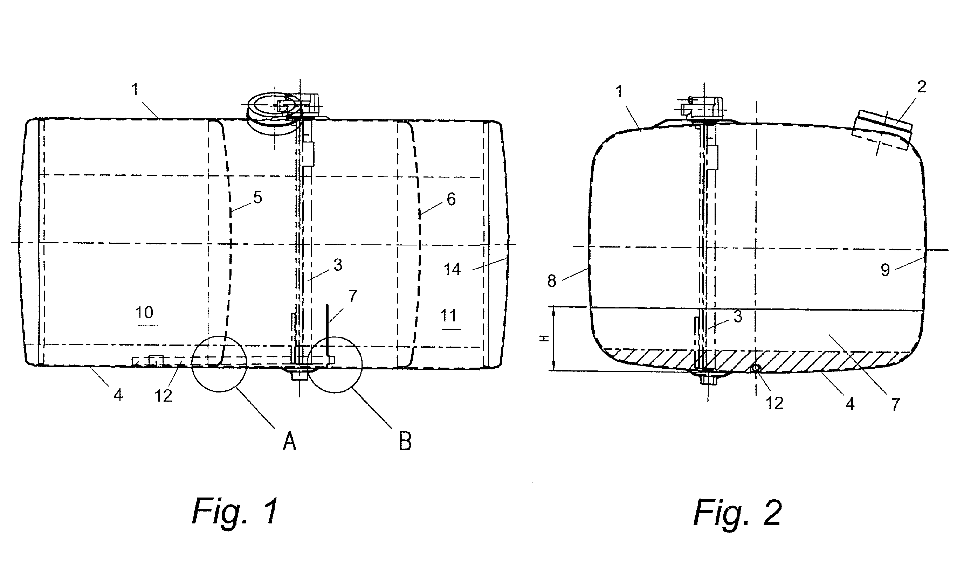

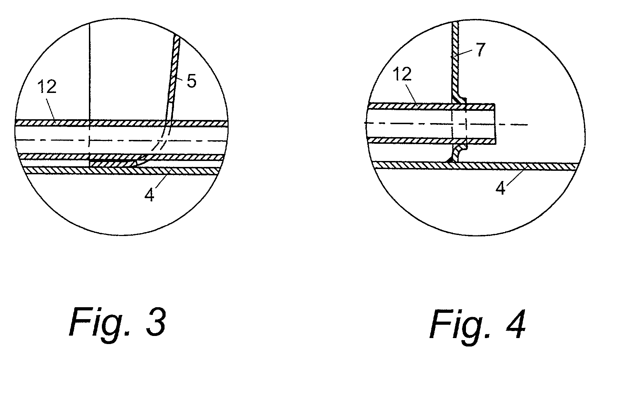

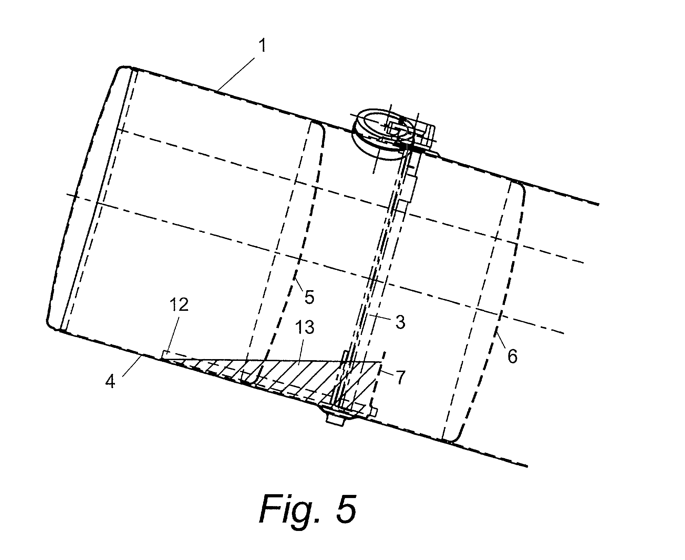

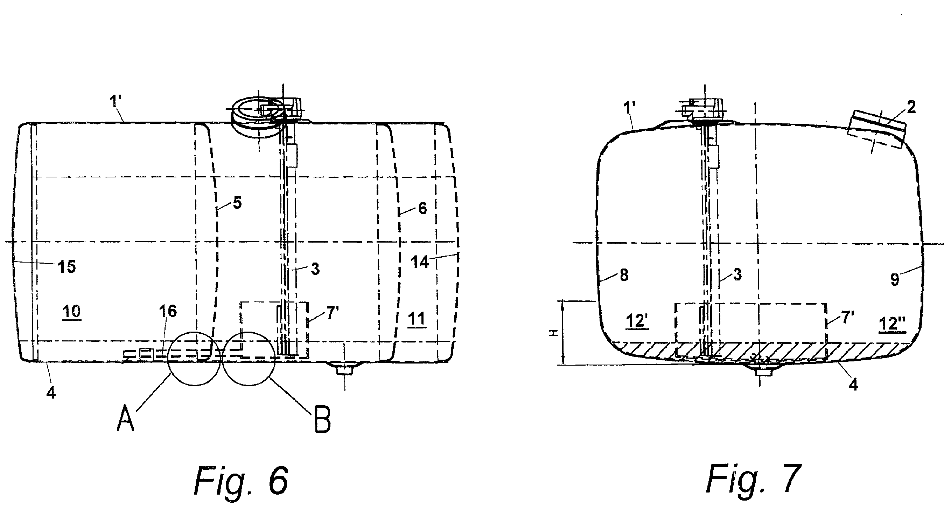

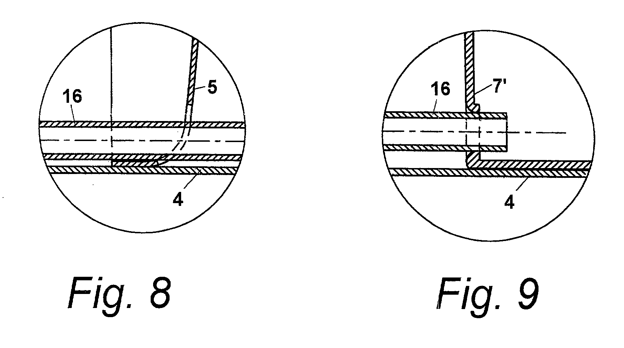

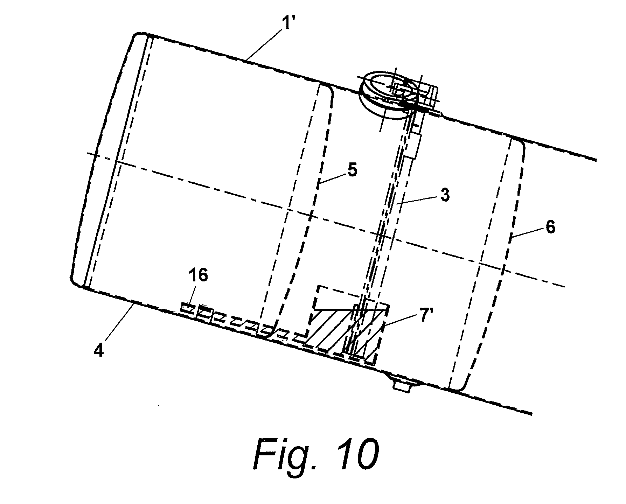

Die Erfindung wird nachstehend anhand eines in den Zeichnungen dargestellten Ausführungsbeispieles näher erläutert. In den Zeichnungen zeigen die Fig. 1 und 2 eine erste Ausführungsform des erfindungsgemäßen Tanks in einem ausschnittsweisen Längsschnitt bzw. einem Querschnitt, die Fig. 3 und 4 zeigen die Details A und B von Fig. 1 in vergrößertem Maßstab, Fig. 5 die Wirkungsweise des Tanks der Fig. 1 bis 4 in der Kippstellung, die Fig. 6 und 7 eine zweite Ausführungsform des erfindungsgemäßen Tanks in einem ausschnittsweisen Längsschnitt bzw. einem Querschnitt, die Fig. 8 und 9 die Details A und B von Fig. 6 in vergrößertem Maßstab und Fig. 10 die Wirkungsweise des Tanks der Fig. 6 bis 9 in der Kippstellung.

In den Fig. 1 bis 5 ist eine erste Ausführungsform eines Tanks 1 gezeigt, welcher insbesondere als Dieselkraftstoffbehälter für Lastkraftwagen bestimmt ist. Der Tank 1 ist mit einem Einlaß 2 und einem Auslaß 3 ausgestattet. Der Auslaß 3 ist von beliebiger Form, z.B. eine Öffnung am oder knapp über dem Boden 4. Im dargestellten Fall eines Kraftstofftanks wird der Auslaß 3 bevorzugt durch ein bis zum Boden 4 des Tanks 1 hinabreichendes Saugrohr gebildet, welches somit im Bereich des Bodens 4 einmündet, genauer knapp oberhalb des Bodens 4. Der Tank 1 ist ferner mit mehreren im wesentlichen vertikalen, durchbrochenen Schwallwänden 5, 6 ausgestattet, wie in der Technik bekannt.

Im Bereich neben der Einmündung des Auslasses 3 im Tank 1 ist eine Trennwand 7 montiert. Die Trennwand 7 geht vom Boden 4 des Tanks 1 aus und ragt über zumindest einen Teil der Höhe des Tanks 1 hoch, siehe Abmessung H in Fig. 2. Die Trennwand 7 ist sowohl mit dem Boden 4 als auch den Seitenwänden 8, 9 des Tanks 1 dicht verbunden.

Die Form und Höhe der Trennwand 7 ist an sich beliebig, solange sie in der Nähe des Auslasses 3 liegt und den Tank 1 zumindest im Bodenbereich in einen ersten, den Auslaß 3 enthaltenden Abschnitt 10 und einen zweiten, davon abgewandten Abschnitt 11 unterteilt. Beispielsweise kann die Trennwand 7 auch durch einen nicht-durchbrochenen unteren Bereich einer Schwallwand gebildet werden (nicht dargestellt).

Die Bodenbereiche 10, 11 sind über eine Flüssigkeitsausgleichsleitung 12 in der Art eines kommunizierenden Gefäßes miteinander verbunden. Die Flüssigkeitsausgleichsleitung 12 kann jede beliebige Form und jeden beliebigen Verlauf haben; im gezeigten Beispiel wird sie durch ein einfaches gerades Rohr gebildet, welches die Trennwand 7 dicht durchsetzt (Fig. 4), durch die Schwallwand 5 mit Spiel hindurchtritt (Fig. 3) und in einem Abstand vom Auslaß 3 und der Trennwand 7 im Bodenbereich 10 endet. Anstelle eines Rohres kann auch ein Schlauchstück, ein Kanal in der Tankwandung od. dgl. verwendet werden.

Wie Fig. 5 zeigt, bewirkt dies, daß sich beim Kippen des Tanks 1 in Richtung auf die Trennwand 7 ein Flüssigkeitsrest 13 in dem Eckbereich zwischen Trennwand 7 und jenem Abschnitt des Bodens 4, welcher von der Flüssigkeitsausgleichsleitung 12 überbrückt ist, ansammeln kann. Der Auslaß 3 kann somit auch in der Kippstellung von Fig. 5 noch gespeist werden; ohne diese Konstruktion würde der Flüssigkeitsrest 13 zur Seitenwand 14 (Fig. 1) fließen, so daß der Einlaß 3 trockenlaufen würde.

Falls gewünscht, kann der Tank 1 mit einer weiteren Kombination aus einer Trennwand und einer Flüssigkeitsausgleichsleitung ausgestattet werden, welche weitere Trennwand beispielsweise in der Zeichnungsebene von Fig. 1 verläuft, um denselben Effekt bei einem Verkippen des Tanks 1 z.B. in Richtung auf die Seitenwand 8 oder 9 zu erzielen (nicht dargestellt). Diese Variante kann bei einem Fahrzeug-Kraftstoffbehälter nützlich sein, um die Speisung des Auslasses 3 bei einer Kurvenfahrt in einer Richtung, z.B. in einem linksdrehenden Kreisverkehr, zu gewährleisten.

In den Fig. 6 bis 10 ist eine zweite Ausführungsform eines Tanks 1' gezeigt. Der Tank 1' entspricht im wesentlichen dem Tank 1 der Fig. 1 bis 5, wobei gleiche Elemente mit denselben Bezugszeichen bezeichnet sind, abgesehen von den nachstehend genannten Modifikationen. Anstelle einer Trennwand 7 ist hier ein Topf 7' vorgesehen, welcher vom Boden 4 des Tanks 1' über zumindest einen Teil H der Höhe des Tanks 1' hochragt und den Auslaß 3 mit Abstand, bevorzugt exzentrisch wie dargestellt, umgibt. Der Topf 7' hält von allen Seitenwänden 8, 9, 14 und 15 Abstand. Der Abstand zu den Seitenwänden 8, 9 bildet "Flüssigkeitsausgleichsleitungen" 12', 12", welche den Bodenbereich 10 mit dem Bodenbereich 11 verbinden, in Analogie zu der Ausführungsform der Fig. 1 bis 5.

Das Innere des Topfes 7' ist über eine Speiseleitung 16 mit dem Bodenbereich 10, jedoch dort in einem Abstand vom Topf 7', verbunden. Auf diese Weise bleibt beim Kippen des Tanks 1' (Fig. 10) eine Flüssigkeitssäule in der Speiseleitung 16 stehen, welche ein hohes Flüssigkeitsniveau im Inneren des Topfes 7' gewährleistet.

Die Speiseleitung 16 kann jede beliebige Form und jeden beliebigen Verlauf haben; im gezeigten Beispiel wird sie durch ein einfaches gerades Rohr gebildet, welches die Wand des Topfes 7' durchsetzt (Fig. 9), durch die Schwallwand 5 mit Spiel hindurchtritt (Fig. 8) und in einem Abstand vom Topf 7' im Bodenbereich 10 endet.

Der Topf 7' kann jede beliebige Form und Größe haben, z.B. rund, quadratisch, oval, rechteckig in der Draufsicht, und jede beliebige Höhe, sofern eine Mindesthöhe überschritten ist, welche das Flüssigkeitsniveau wie in Fig. 10 dargestellt ermöglicht. Die "Flüssigkeitsausgleichsleitung" 12', 12" zwischen der einen Seite und der anderen Seite des Topfes kann ebenfalls auf beliebige Weise gebildet werden, z.B. mittels eines den Topf 7' durchsetzenden Kanales, wenn dieser die Seitenwände 8, 9 berührt, usw.

Die Erfindung ist selbstverständlich nicht auf die dargestellte Ausführungsform und den beschriebenen Anwendungszweck beschränkt. Tatsächlich kann der erfindungsgemäße Tank für jede beliebige Art von Flüssigkeit verwendet werden, wenn eine Entnahme bei geringen Füllständen und im Kippzustand gewährleistet werden soll. Die Form und das Material des Tanks können entsprechend den Anforderungen beliebig gewählt werden.

## Patentansprüche

1. Tank (1) für Flüssigkeiten, insbesondere Kraftstoffe, mit einem Auslaß (3), der im Bereich des Bodens (4) des Tanks von einer Seitenwand (14) des Tanks entfernt einmündet, **gekennzeichnet durch** zumindest eine Trennwand (7), die vom Boden (4) ausgehend über zumindest einen Teil (H) der Höhe des Tanks hochragt und neben dem Auslaß (3) liegt, und eine Flüssigkeitsausgleichsleitung (12), welche den Bodenbereich (10) des Tanks auf der dem Auslaß (3) zugewandten Seite der Trennwand (7), jedoch in einem Abstand vom Auslaß (3) und der Trennwand (7) entfernt, mit dem Bodenbereich (11) auf der dem Auslaß (3) abgewandten Seite der Trennwand (7) verbindet.

2. Tank nach Anspruch 1, **dadurch gekennzeichnet, daß** die Flüssigkeitsausgleichsleitung (12) ein Rohr ist, welches die Trennwand (7) durchsetzt, im wesentlichen parallel zum Boden des Tanks (1) verläuft und in einem Abstand vom Auslaß (3) endet.

3. Tank nach Anspruch 1 oder 2, mit zumindest einer vertikalen, durchbrochenen Schwallwand (5, 6), **dadurch gekennzeichnet, daß** die Trennwand (7) durch einen undurchlässigen unteren Bereich der Schwallwand (5, 6) gebildet wird.

4. Tank (1) für Flüssigkeiten, insbesondere Kraftstoffe, mit einem Auslaß (3), der im Bereich des Bodens (4) des Tanks von einer ersten Seitenwand (14) des Tanks entfernt einmündet, **gekennzeichnet durch** einen Topf (7'), der den Auslaß (3) umgibt und Abstand von den Seitenwänden (8, 9, 14, 15) des Tanks (1) hält, und eine Speiseleitung (16) für den Topf (7'), welche das Topfinnere mit dem von der genannten ersten Seitenwand (14) entfernten Bodenbereich (10) des Tanks, jedoch in einem Abstand vom Topf (16) entfernt verbindet.

5. Tank nach Anspruch 4, **dadurch gekennzeichnet, daß** die Speiseleitung (16) ein Rohr ist, welches die Wand des Topfes (7') durchsetzt, im wesentlichen parallel zum Boden (4) des Tanks (1) verläuft und in einem Abstand vom Topf (7') entfernt endet.
